# EUROPEAN PATENT SPECIFICATION

(11) **EP 3 792 109 B1**
(45) Date of publication and mention of the grant of the patent: **10.01.2024**
(21) Application number: 19799166.4
(22) Date of filing: 22.04.2019
(51) Int. Cl.: B60P 3/36

(54) **CARAVAN WITH BUILT-IN ACCESS FOR DRIVING MOTORCYCLES OR OTHER VEHICLES INTO SAME**
WOHNWAGEN MIT EINGEBAUTEM ZUGANG ZUM HINEINFAHREN VON MOTORRÄDERN ODER ANDEREN FAHRZEUGEN
CARAVANE À ACCÈS INTÉGRÉ POUR CHARGER À SON BORD DES MOTOS OU D'AUTRES VÉHICULES

(30) Priority: 11.05.2018 ES 201830678 U
(43) Date of publication of application: 17.03.2021
(73) Proprietor: PEREZ VAN-SLUIJS, Jacobo, 28440 Guadarrama (Madrid) (ES)
(72) Inventor: PEREZ VAN-SLUIJS, Jacobo, 28440 Guadarrama (Madrid) (ES)
(74) Representative: Munoz Garcia, Antonio
(86) International application number: PCT/ES2019/070273
(87) International publication number: WO 2019/215356

(56) References cited:
- WO-A1-2009/140714
- WO-A1-2009/140714
- DE-A1- 3 333 927
- DE-A1- 3 333 927
- FR-A1- 2 689 478
- FR-A1- 2 689 478
- GB-A- 2 415 680
- GB-A- 2 415 680
- US-A- 3 519 154
- US-A- 4 854 631
- US-A- 4 854 631
- US-A1- 2001 038 787

## Description

### OBJECT OF THE INVENTION

As expressed in the title of the present specification, the invention relates to a caravan with built-in access for driving motorcycles or other vehicles into same, providing the intended function thereof with advantages and features that are described in detail below and constitute a novelty in the current state of the art.

More specifically, the object of the invention focuses on a caravan of those consisting of a vehicle conditioned to be lived in and towed by an automobile, which is characterized by having a series of integrated structural elements, and optionally additional accessories, which are particularly designed to provide simple and practical access means for effortlessly driving a vehicle, such as a motorcycle, a wheelchair, a cart, or other objects with wheels, even a large motorcycle, into the caravan and placing it therein.

### FIELD OF APPLICATION OF THE INVENTION

The field of application of the present invention is comprised within the transportation sector, focusing particularly in the field of caravans and similar vehicles.

### BACKGROUND OF THE INVENTION

As is known, many caravan users who travel by towing the caravans with their vehicle also tend to bring bicycles and/or motorcycles with them as auxiliary means of travel for use at the destination point. To that end, generally, accessories external to the caravan cabin in which said vehicles are secured are often incorporated.

In addition to fact that they are unsuitable for large motorcycles due to the weight that they may have, these securing systems present the problem of theft risk as they are exposed on the outside of the cabin. However, keeping the securing systems inside the cabin, which is safer, is usually very complicated given the difficulty in accessing them, particularly large motorcycles, given the height of the floor of the cabin.

Moreover, the means existing today to facilitate said access usually consist of the use of special ramps of a large weight and volume that must be handled with enormous effort to place them at the entry of the cabin, and once the motorcycle or vehicle in question has been driven into the cabin, these means will have to be moved again for removal and storage purposes, taking up valuable space inside the cabin.

Therefore, the objective of the present invention is to develop an improved caravan which incorporates an access ramp that can be readily placed and removed in order to avoid the described drawbacks.

Moreover, and as reference to the current state of the art, it must be indicated that, although different caravans with all type of configurations, accessories, and devices for different uses are known, the applicant at least is unaware of the existence of any caravan having technical, structural, and constitutive features that are identical or similar to those herein claimed.

In this sense, it must be indicated that document WO2009140714A1 discloses a vehicle-mounted wheelchair boarding apparatus which, similarly to the caravan of the present invention, has a ramp connected to the body of the vehicle by a pivot assembly at an intermediate location between the front and rear of the body, where said ramp extends to the rear of the body and terminates in a ground engageable edge, there being actuating means for pivotally moving the ramp between a horizontal position and a lowered position where the edge engages the ground so that a wheelchair can be maneuvered immediately behind the body for wheeling up the ramp when it is in the lowered position and can be transported on the ramp when it is in the horizontal position.

However, in addition to not being designed for implementation in a caravan for the purpose of allowing a vehicle, such as a motorcycle, to be driven into same, said apparatus differs from the present invention in that the mentioned ramp constitutes an element that is much more complex and expensive to manufacture and assemble, since it is not defined by a part made of the same board as the rest of the floor, fitting tightly and flush into a complementary gap made for this purpose at one end of the floor, aligned with the door for accessing the cabin, nor is it connected by the proximal side thereof, towards the center of the floor, to said gap of the floor of the cabin and to the chassis of the caravan via a hinged joint, or provided at its distal side with locking means securing it to the chassis in the closed inoperative position, being flush with the rest of the floor.

Furthermore, from document US2001038787A1 a ramp is also known to allow wheelchair access to a bus, comprising a lifting and folding platform pivotally mounted on a support frame, which, however, has an additional extendable platform beyond of a front end of the platform and retractable with respect to that platform, which, when it is in the fully retracted position, has fixing means that, unlike the ramp of the caravan of the present invention, consist of lateral flanges that extend into a slot so that flanges can rest on the bottom sides and support the ramp raised and retracted

### DESCRIPTION OF THE INVENTION

The caravan with built-in access for driving motorcycles or other vehicles into same proposed by the invention is therefore configured as a novelty in its field of application, given that the objectives indicated above are specifically and satisfactorily achieved in view of its implementation, with the characterizing details making it possible and distinguishing same being suitably described in the final claims accompanying the present description.

More specifically, as set forth above, the invention proposes providing a caravan of the type intended to be towed by an automobile, formed by a chassis with wheels and coupling means for said towing on which a cabin conditioned as a living space to be lived in is coupled, said caravan being characterized by comprising, integrated in the actual chassis and cabin, access means for effortlessly driving a motorcycle, a wheelchair, a cart, or other objects with wheels, into the caravan and placing it therein, with said access means being equipped with the robustness required to be able to provide access even to a large motorcycle.

To that end, said means are based on the fact the actual floor of the cabin, preferably consisting of a sandwich-type board formed by layers of wood, insulation, and wood, incorporates a ramp defined by a rectangular portion of said board, fitting tightly and flush into a complementary gap made for this purpose at one end of the floor, aligned with the door of the cabin, usually the rear end, which portion is connected on one side to the rest of the floor of the cabin and to the chassis of the caravan via a hinged joint which allows collapsing the ramp to lower it to the ground by the opposite side and to act as a ramp through which the motorcycle can be driven into the cabin, and said portion has on the opposite side with locking means for securing same to the chassis of the caravan in an inoperative position, being flush with the rest of floor with no possibility of collapsing when the lock is in the locked position, assuring the firmness and robustness of the floor of the inside of the cabin for the use thereof in a normal situation and with a motor thereon.

Thus, every time a motorcycle is to be driven into the cabin of the caravan, it will suffice to open the lock of the ramp, cause the ramp to collapse downwards to the ground, drive the motorcycle up the ramp, and again place the ramp in the closed position, all this effortlessly, as any need to move the ramp from a storage position to an operational position and vice versa is prevented, furthermore preventing the need to arrange said housing for keeping the ramp, given that said ramp is an integral part of the actual floor of the cabin and does not take up any extra space in the closed position.

Additionally, the caravan also furthermore has an electric winch for pulling the motorcycle up the ramp into the cabin, which winch is preferably housed in the compartment of the front portion which can be found in most existing caravans and is located on the beams for coupling to the automobile, where it has been envisaged for the winch to be attached such that it is screwed to a steel sheet, and for there to be a through hole for passing the cable from said compartment to the inner portion of the cabin.

The described caravan with built-in access for driving motorcycles or other vehicles into same therefore represents an innovation in structural and constitutive features that have been unknown up until now, and these reasons, combined with its practical usefulness, provide it with sufficient grounds to obtain the exclusive privilege that is sought.

### DESCRIPTION OF THE DRAWINGS

To complement the description that is being made and for the purpose of helping to better understand the features of the invention, a set of drawings is attached to the present specification as an integral part thereof in which the following is depicted in a non-limiting, illustrative manner:
Figure 1 shows a bottom perspective view of the caravan with built-in access for driving motorcycles or other vehicles into same, object of the invention, with the main portions and elements characterizing it, specifically the collapsible access ramp incorporated in the floor of the cabin, as well as the configuration and arrangement thereof, being observed.
Figure 2 shows a bottom perspective view of the proximal end of hinged joint of the access ramp, with the hinges connecting it to the chassis being observed.
Figure 3 shows a bottom perspective view of the opposite end of the ramp with respect to that shown in the preceding figure, i.e., the distal end of the access ramp, with the locking means for locking same to the chassis being observed.
Figure 4 shows a perspective view of a front portion of the caravan, specifically the compartment which is located on the beams for coupling to the automobile, with the electric winch incorporated for pulling the motorcycle into the cabin, being observed.

### PREFERRED EMBODIMENT OF THE INVENTION

In view of the mentioned figures and according to the numbering used, a non-limiting embodiment of the caravan with built-in access for driving motorcycles or other vehicles into same of the invention can be seen therein, which caravan comprises the portions and elements indicated and described in detailed below.

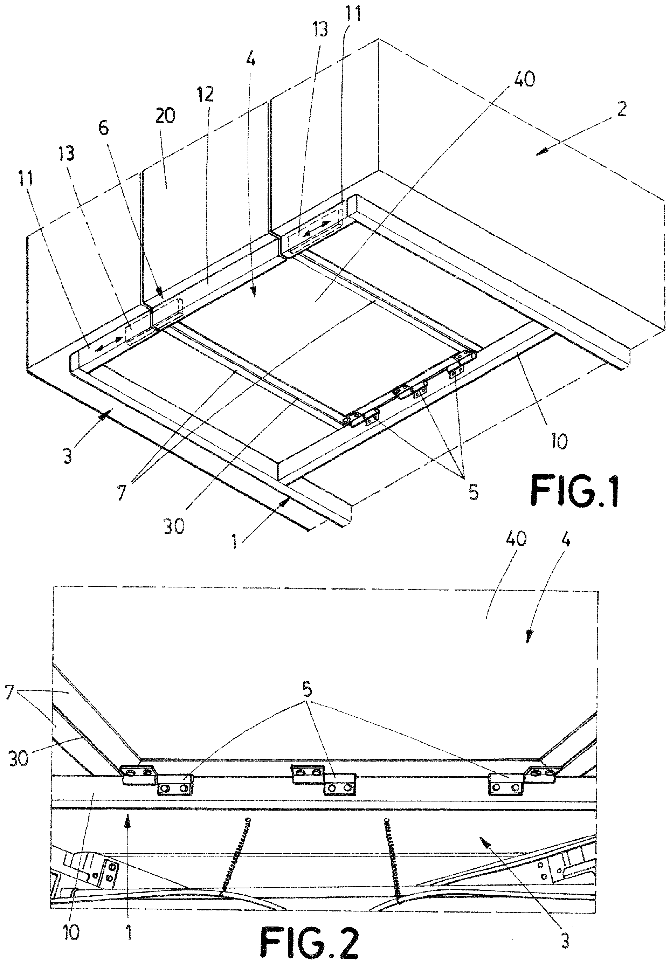

In that sense, as seen in said Figure 1, the caravan in question, formed by a chassis (1) and a cabin (2) of variable dimensions and configuration, is characterized by comprising, attached to the actual chassis (1) and integrated in the floor (3) of the cabin (2), a collapsible ramp (4) with a collapsed operational position, in which it serves as access means for driving a motorcycle up and placing it inside the caravan, and a closed inoperative position, in which it is an integral part of the actual floor (3) of the cabin (2).

To that end, the mentioned ramp (4) is preferably defined by a rectangular part (40) made of the same board as the rest of the floor (3), preferably consisting of sandwich-type board formed by layers of wood, insulation, and wood, fitting tightly and flush into a complementary gap (30) made for this purpose at one end of the floor (3), aligned with the door (20) for accessing the cabin (2) and preferably of the same width as the latter. Furthermore, said part (40) is connected by the proximal side thereof, towards the center of the floor (3), to said gap (30) of the floor (3) of the cabin and to the chassis (1) of the caravan via a hinged joint (5) which allows collapsing same to lower it to the ground by the opposite or distal side, on the edge of the floor (3) and adjacent to the door (20), and thereby act as a ramp (4), and it is provided by said distal side with locking means (6) that allow it to be secured to the chassis (1) in the closed inoperative position, being flush with the rest of the floor (3).

Preferably, both the perimetral edge of the rectangular board part (40) forming the ramp (4) and the perimetral edge of the gap (30) of the floor (3) into which said ramp (4) is fitted are provided with a metallic reinforcement (7) preferably consisting of a U-shaped profile of screwed galvanized sheet.

Preferably, the hinged joint (5) which allows collapsing the ramp (4) from its inoperative position flush with the floor (3) to its operational position, is formed by several hinges that are screwed to the reinforcement (7) of the part (40) of the ramp (4) and to an intermediate crosspiece (10) of the chassis (1), located aligned with the proximal side of said part (40), as seen in Figures 1 and 2.

And the locking means (6) of the ramp (4), in their inoperative position flush with the floor (3) of the cabin (2), are preferably determined by respective transverse external tube segments (11, 12), two side segments (11) forming the chassis (1) at the rear end thereof, attached beneath the floor (3) to both sides of the ramp (4), and one central segment (12) attached on the distal side of the ramp (4), which segments are, for example, 50 x 50 mm squares, between which segments there run two other sliding internal tube segments (13), for example a 45 x 45 square tube, such that these sliding internal tube segments can move to either side of the central tube (12) and be secured via respective set screws (14) for blocking the separation of the side tubes (11) to the left and right sides of the ramp (4) and the central tube (12), preventing the unlocking thereof, or for allowing the separation thereof for collapsing the ramp (4). Additionally, the caravan also has an electric winch (8) for pulling the motorcycle up the ramp (4) into the cabin (2), which winch is preferably housed in the compartment (21) of the front portion of the cabin (2) on the beams (15) of the chassis (1) which are used for coupling to the automobile, where it has been envisaged for the winch to be attached such that it is screwed to a steel sheet (9) together with a through hole (22) made for this purpose for passing the cable into the cabin (2).

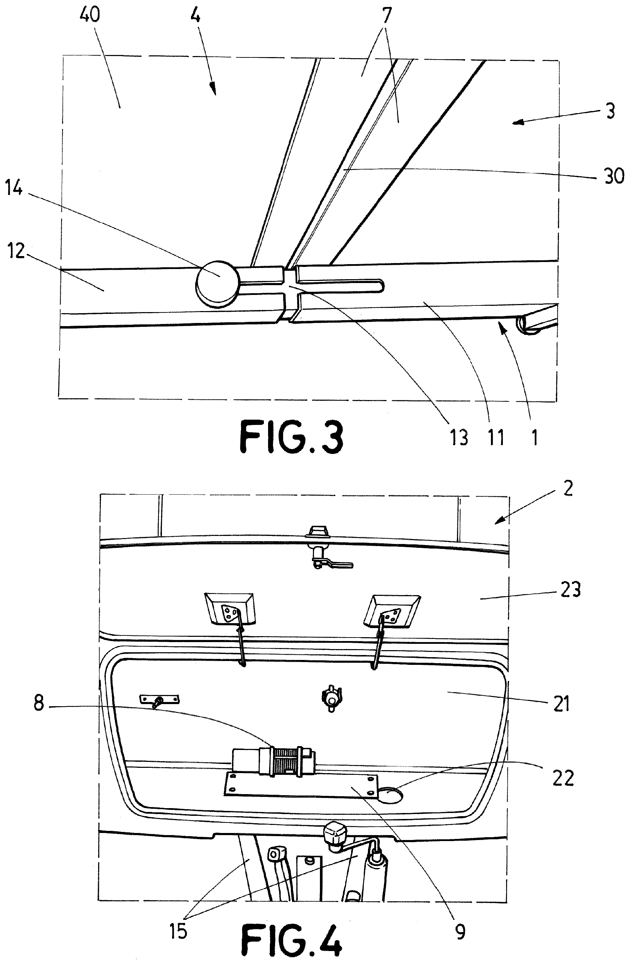

Figure 4 depicts said compartment (21) with its door (23) open, allowing the arrangement of the mentioned electric winch (8) to be seen.

Having sufficiently described the nature of the present invention, as well as the manner of putting it into practice, it is not considered necessary to expand on this explanation so that one skilled in the art will understand that the invention is only limited by the content of the appended claims.

## Claims

1. A caravan with built-in access for driving motorcycles or other vehicles into same, formed by a chassis (1) and a cabin (2) of variable dimensions and configuration, comprising, attached to the actual chassis (1) and integrated in the floor (3) of the cabin (2), a collapsible ramp (4) with a collapsed operational position, in which it serves as access means for driving a motorcycle up and placing it inside the caravan, and a closed inoperative position, in which it is an integral part of the actual floor (3) of the cabin (2), and wherein the ramp (4) is defined by a rectangular part (40) made of the same board as the rest of the floor (3), fitting tightly and flush into a complementary gap (30) made for this purpose at one end of the floor (3), aligned with the door (20) for accessing the cabin (2); where the part (40) defining the ramp (4) is connected by the proximal side thereof, towards the center of the floor (3), to the gap (30) of the floor (3) of the cabin and to the chassis (1) of the caravan via a hinged joint (5) which allows collapsing same to lower it to the ground by the opposite or distal side, on the edge of the floor (3) and adjacent to the door (20), and said distal side is provided with locking means (6) that allow it to be secured to the chassis (1) in the closed inoperative position, being flush with the rest of the floor (3), **characterized in that** the locking means (6) of the ramp (4), in their inoperative position flush with the floor (3) of the cabin (2), are determined by respective transverse external tube segments (11, 12), two side segments (11) forming the chassis (1) at the rear end thereof, attached beneath the floor (3) to both sides of the ramp (4), and one central segment (12) attached on the distal side of the ramp (4), between which segments there run two other sliding internal tube segments (13) which can move to either side of the central tube (12) and be secured via set screws (14) for blocking the separation of the side tubes (11) to the left and right sides of the ramp (4) and the central tube (12), preventing the unlocking thereof, or for allowing the separation thereof for collapsing the ramp (4).

2. The caravan with built-in access for driving motorcycles or other vehicles into same according to claim 1, **characterized in that** both the perimetral edge of the rectangular board part (40) forming the ramp (4) and the perimetral edge of the gap (30) of the floor (3) into which said ramp (4) is fitted are provided with a metallic reinforcement (7).

3. The caravan with built-in access for driving motorcycles or other vehicles into same according to claim 2, **characterized in that** the hinged joint (5), which allows collapsing the ramp (4) from its inoperative position flush with the floor (3) to its operational position, is formed by several hinges that are screwed to the reinforcement (7) of the part (40) of the ramp (4) and to an intermediate crosspiece (10) of the chassis (1), located aligned with the proximal side of said part (40).

4. The caravan with built-in access for driving motorcycles or other vehicles into same according to any of claims 1 to 3, **characterized in that** the board forming part (40) defining the ramp (4) and the floor (3) is a sandwich-type board formed by layers of wood, insulation, and wood.

5. The caravan with built-in access for driving motorcycles or other vehicles into same according to any of claims 1 to 4, **characterized in that** it also has an electric winch (8) for pulling the motorcycle up the ramp (4) into the cabin (2) housed in a compartment (21) of the front portion, screwed to a steel sheet (9) together with a through hole (22) made for passing the cable into the cabin (2).

## Patentansprüche

1. Wohnwagen mit eingebautem Zugang zum Hineinfahren von Motorrädern oder anderen Fahrzeugen, der aus einem Fahrgestell (1) und einer Kabine (2) variabler Abmessungen und Gestaltung besteht, umfassend eine an dem Fahrgestell (1) selbst angebrachte und im Boden (3) der Kabine (2) integrierte klappbare Rampe (4) mit einer aufgeklappten Betriebsposition, in der sie als Zugangsweg dient, um ein Motorrad hinaufzufahren und es innerhalb des Wohnwagens abzustellen, und einer zusammengeklappten Ruheposition, in der sie ein integraler Bestandteil des Bodens (3) selbst der Kabine (2) ist, und wobei die Rampe (4) durch ein rechteckiges Teil (40) definiert ist, das aus der gleichen Platte besteht wie der Rest des Bodens (3) und eng anliegend und bündig in einen komplementären Hohlraum (30) passt, der zu diesem Zweck an einem Ende des Bodens (3) in Übereinstimmung mit der Tür (20) zum Betreten der Kabine (2) ausgebildet ist; wobei das Teil (40), das die Rampe (4) definiert, an dessen proximaler Seite zur Mitte des Bodens (3) hin über ein Scharniergelenk (5), das ihr Aufklappen und Absenken zum Erdboden an der entgegengesetzten oder distalen Seite am Rand des Bodens (3) und neben der Tür (20) ermöglicht, mit dem Hohlraum (30) des Bodens (3) der Kabine und mit dem Fahrgestell (1) des Wohnwagens verbunden ist, und die distale Seite mit Verriegelungsmitteln (6) versehen ist, die in der geschlossenen Ruheposition deren Befestigung an das Fahrgestell (1) bündig zum Rest des Bodens (3) ermöglichen, **dadurch gekennzeichnet, dass** die Verriegelungsmittel (6) der Rampe (4) in ihrer zum Boden (3) der Kabine (2) bündigen Ruheposition durch jeweilige transversale externe Rohrsegmente (11, 12), zwei seitliche Segmente (11), die an deren hinteren Ende das Fahrgestell (1) bilden und unterhalb des Bodens (3) an beide Seiten der Rampe (4) befestigt sind, und ein zentrales Segment (12), das an der distalen Seite der Rampe (4) befestigt ist, bestimmt sind, wobei zwischen den Segmenten zwei weitere gleitende interne Rohrsegmente (13) verlaufen, die sich an jeder Seite des zentralen Rohrs (12) bewegen können und zum Blockieren der Trennung zwischen den seitlichen Rohren (11) links und rechts der Rampe (4) und dem zentralen Rohr (12) über Stellschrauben (14) befestigt werden können, um so ihre Entriegelung zu verhindern oder ihre Trennung zum Aufklappen der Rampe (4) zu ermöglichen.

2. Wohnwagen mit eingebautem Zugang zum Hineinfahren von Motorrädern oder anderen Fahrzeugen nach Anspruch 1, **dadurch gekennzeichnet, dass** sowohl der umlaufende Rand des rechteckigen Plattenteils (40), das die Rampe (4) bildet, als auch der umlaufende Rand des Hohlraums (30) des Bodens (3), in den die Rampe (4) passt, mit einer metallischen Verstärkung (7) versehen sind.

3. Wohnwagen mit eingebautem Zugang zum Hineinfahren von Motorrädern oder anderen Fahrzeugen nach Anspruch 2, **dadurch gekennzeichnet, dass** das Scharniergelenk (5), das das Aufklappen der Rampe (4) von ihrer zum Boden bündigen Ruheposition (3) in ihre Betriebsposition ermöglicht, aus mehreren Scharnieren besteht, die an die Verstärkung (7) des Teils (40) der Rampe (4) und an eine dazwischenliegende Quertraverse (10) des Fahrgestells (1), die in Übereinstimmung mit der proximalen Seite des Teils (40) positioniert ist, geschraubt ist.

4. Wohnwagen mit eingebautem Zugang zum Hineinfahren von Motorrädern oder anderen Fahrzeugen nach einem der Ansprüche 1 bis 3, **dadurch gekennzeichnet, dass** die Platte, die das Teil (40) bildet, das die Rampe (4) und den Boden (3) definiert, eine sandwichartige Platte ist, die aus Holz-, Isolierungs- und Holzschichten besteht.

5. Wohnwagen mit eingebautem Zugang zum Hineinfahren von Motorrädern oder anderen Fahrzeugen nach einem der Ansprüche 1 bis 4, **dadurch gekennzeichnet, dass** er ebenfalls eine elektrische Winde (8) zum Einziehen des Motorrads über die Rampe (4) in die Kabine (2) aufweist, die in einer Truhe (21) der Vorderseite untergebracht ist, die an ein Stahlblech (9) neben einem Durchgangsloch (22) geschraubt ist, das zum Durchführen des Kabels in die Kabine (2) ausgebildet ist.

## Revendications

1. Caravane à accès intégré pour charger à son bord des motos ou d'autres véhicules, formée par un châssis (1) et une cabine (2) de configuration et de dimensions variables, comprenant, fixée au propre châssis (1) et intégrée au sol (3) de la cabine (2), une rampe rabattable (4) avec une position opérationnelle rabattue, dans laquelle elle sert comme moyen d'accès pour charger une motocyclette et la placer dans son intérieur, et une position fermée de repos, dans laquelle elle fait partie du propre sol (3) de la cabine (2), et dans laquelle la rampe (4) est définie par une partie rectangulaire (40) faite du même panneau que le reste du sol (3), s'ajustant étroitement et à ras dans un renfoncement complémentaire (30) fait à cet effet à une extrémité du sol (3), aligné avec la porte (20) pour accéder à la cabine (2) ; où la partie (40) définissant la rampe (4) est reliée par le côté proximal de celle-ci, vers le centre du sol (3), au renfoncement (30) du sol (3) de la cabine et au châssis (1) de la caravane par le biais d'une articulation à charnière (5) qui permet de rabattre celle-ci pour l'abaisser au sol par le côté opposé ou distal, sur le bord du sol (3) et adjacent à la porte (20), et, dans ledit côté distal, elle est pourvue de moyens de verrouillage (6) qui lui permettent d'être fixée au châssis (1) dans la position fermée de repos, étant à ras avec le reste du sol (3), **caractérisée en ce que** les moyens de verrouillage (6) de la rampe (4) dans sa position de repos à ras avec le sol (3) de la cabine (2) sont déterminés par des segments transversaux de tube externe respectifs (11, 12), deux segments latéraux (11) formant le châssis (1) à l'extrémité arrière de celui-ci, fixés en-dessous du sol (3) aux deux côtés de la rampe (4), et un segment central (12) fixé sur le côté distal de la rampe (4), entre lesquels y passent deux autres segments de tube interne coulissants (13) qui peuvent se déplacer à chaque côté du tube central (12) et être fixés par le biais de vis de réglage (14) pour bloquer la séparation des tubes latéraux (11) aux côtés gauche et droit de la rampe (4) et le tube central (12), empêchant son ouverture, ou pour permettre sa séparation pour rabattre la rampe (4).

2. Caravane à accès intégré pour charger à son bord des motos ou d'autres véhicules selon la revendication 1, **caractérisée en ce qu'**aussi bien le bord périmétrique de la partie de panneau rectangulaire (40) formant la rampe (4) que le bord périmétrique du renfoncement (30) du sol (3) dans lequel ladite rampe (4) est ajustée sont pourvus d'un renfort métallique (7).

3. Caravane à accès intégré pour charger à son bord des motos ou d'autres véhicules selon la revendication 2, **caractérisée en ce que** l'articulation à charnière (5) qui permet de rabattre la rampe (4) depuis sa position de repos à ras du sol (3) à sa position opérationnelle, est formée de plusieurs charnières qui sont vissées au renfort (7) de la partie (40) de la rampe (4) et à une traverse intermédiaire (10) du châssis (1), située alignée avec le côté proximal de ladite partie (40).

4. Caravane à accès intégré pour charger à son bord des motos ou d'autres véhicules selon l'une quelconque des revendications 1 à 3, **caractérisée en ce que** le panneau formant la partie (40) définissant la rampe (4) et le sol (3) est un panneau de type sandwich formé par des couches de bois, d'isolant et de bois.

5. Caravane à accès intégré pour charger à son bord des motos ou d'autres véhicules selon l'une quelconque des revendications 1 à 4, **caractérisée en ce qu'**elle comprend en outre un treuil électrique (8) pour tirer la moto sur la rampe (4) à l'intérieur de la cabine (2) logé dans un compartiment (21) dans la partie avant, vissé à une plaque d'acier (9) ainsi qu'un trou traversant (22) fait pour passer le câble à l'intérieur de la cabine (2).
